# EUROPEAN PATENT APPLICATION

(11) **EP 1 143 464 A2**
(43) Date of publication of application: **10.10.2001**
(21) Application number: 01108531.3
(22) Date of filing: 04.04.2001
(51) Int. Cl.: H01G 2/14

(54) **Nonflammble and disaster prevention type capacitor**

(30) Priority: 05.04.2000 JP 2000103248; 12.04.2000 JP 2000110514
(71) Applicant: Nissin Electric Co., Ltd., Kyoto-shi, Kyoto 615 (JP)
(72) Inventor: Itahashi, Satoru, Ukyo-ku, Kyoto-shi, Kyoto 615 (JP); Kamba, Masaru, Ukyo-ku, Kyoto-shi, Kyoto 615 (JP); Tanaka, Yoshihisa, Ukyo-ku, Kyoto-shi, Kyoto 615 (JP)
(74) Representative: Grünecker, Kinkeldey, Stockmair & Schwanhäusser Anwaltssozietät

(57) **Abstract**

In a nonflammable and disaster prevention type capacitor, the sealing property of the capacitor container is increased, a plurality of capacitor elements are collected, is accommodated in the container, and its inside is vacuum deaerated, the perfluorocarbon liquid deaerated by a deaeration apparatus is filled, and a capacitor which maintains an amount of residual air in the perfluorocarbon liquid to be not larger than 5 %, is formed. A fluoride liquid to be filled in the container, consisting of a connection of carbon, fluorine and oxygen, and which includes per fluoropolyether by not smaller than 90 % and whose boiling point is not lower than 120 °C and not higher than 270 °C, and whose dynamic viscosity at 25 °C is from 0.9 mm²/s to not larger than 14 mm²/s, is impregnated into the capacitor element. An absolute pressure in the container is not smaller than 120 kPa and not larger than 300 kPa.

## Description

### BACKGROUND OF THE INVENTION

### 1. Field of the Invention

The present invention relates to a nonflammable and disaster prevention type capacitor.

### 2. Description of the Related Art

Particularly, in many cases, a power receiving and transformation power distribution facility is arranged in a narrow space such as the inside of a house. In addition, machines used for the power receiving and transformation power distribution facility are required, of course, to have a small size, high performance, and high reliability, and further, to attain the prevention and suppression of a suddenly occurring accident. As one of capacitors used for such the facility, it is considered that the perfluorocarbon liquid having no flashing point and high dielectric strength is impregnated, and the nonflammable capacitor is made.

In such the nonflammable capacitor, in the same manner as the conventional one, the capacitor is formed and structured in such a manner that a dielectric substance of the plastic film formed of polypropylene, or the like, and aluminum foil, or a metallized film in which an electric conductor such as aluminum or zinc is evaporated on both sides or a single side of the plastic film are alternately superimposed on each other and wound around, and the capacitor element is formed, and a plurality of the capacitor elements are collected and accommodated in a container in which the perfluorocarbon liquid is filled.

The perfluorocarbon liquid impregnated into the nonflammable capacitor has a fluorocarbon structure in which all of hydrogen portions directly connected to carbon are replaced with fluorine, and the molecular structure may include the other atoms being connected in its molecule. Then, in the heat treatment conducted in the production process of the capacitor, the liquid in which the boiling point at which the liquid is not boiled, is not lower than 80 °C, preferably, 80 °C to 270 °C, is used, and the liquid which has a form of the liquid in the normal specification temperature -20 °C to 80 °C, is used.

However, in the capacitor into which such the perfluorocarbon liquid is impregnated, even when the flame is generated instantly, the combustion doses not continue and the capacitor is excellent in the prevention of disasters, however, there is a problem in which it is difficult to effectively use the characteristic that the dielectric strength is high, the characteristic being originally possessed by the perfluorocarbon. As one of causes occurring this problem, it is found that the perfluorocarbon liquid easily contains the air, and due to the air contained during the operation, the dielectric breakdown voltage or partial discharge start voltage are lowered.

While, as the conventional capacitor, the capacitor is structured in such a manner that a dielectric substance of the plastic film and a conductor material of an aluminum foil are alternately superimposed on each other and wound around, and the capacitor element is formed, and a plurality of the capacitor elements are collected and accommodated in a container, and in the container, the aromatic synthetic oil such as alkyl naphthalene or alkyl diphenyl ethane, is filled, or the dielectric substance of the plastic film and a metallized paper electrode in which conductor metal is evaporated on the paper are alternately superimposed on each other and wound around, and the capacitor element is formed, and a plurality of the capacitor elements are collected and accommodated in a container, and in the container, the rape seed oil or ester oil is filled.

However, the aromatic synthetic oil, rape seed oil or ester oil impregnated into the capacitor is inflammable. In the mounting of the capacitor impregnated with such the oil, for the prevention of disaster, there is a drawback in which it is required to prepare a fixed type fire extinguishing apparatus. As a capacitor to solve this drawback, there is a capacitor in which the metallized film, in which the conductor metal is evaporated on the dielectric substance of the plastic film, and the dielectric substance of the plastic film are alternately superimposed on each other and wound around, and a capacitor element is formed, and a plurality of the capacitor elements are collected and accommodated in the container, and in the container, SF6 gas is filled, or the capacitor elements are epoxy-molded, that is, made as a dry type capacitor.

However, in such the dry type capacitor, although the fixed type fire extinguishing apparatus is not necessary, the air or SF6 gas is filled into the high electric field portion of the dielectric substance, and from the characteristic of the gas, the dielectric strength is low and unstable for the long period of use, and there is a problem that the low electric field design is necessary and it is inevitable to increase the size. Further, for the capacitor into which SF6 gas is filled, there is a problem that the possibility of the environmental contamination (for example, the global warming) exists.

### SUMMARY OF THE INVENTION

The present invention is attained according to this finding, and a first object of the present invention is to provide a nonflammable capacitor in which the amount of air contained in the perfluorocarbon liquid is decreased, and which has high dielectric breakdown voltage and high partial discharge start voltage.
In addition, a second object of the present invention is to provide a disaster prevention type capacitor by which the arrangement of the fixed type fire extinguishing apparatus due to the mounting of the capacitor is not necessary, and the downsizing of the capacitor is attained.

In a capacitor described in a first embodiment of the present invention, a capacitor element is formed by alternately superimposing a conductive foil and the plastic film on each other and by winding around them, and a plurality of the capacitor elements are collected and accommodated in a container in which the perfluorocarbon liquid is filled, the container is made air tight, and an amount of residual air in the perfluorocarbon liquid is not larger than 5 %.

In the embodiment of the present invention, in the capacitor container whose sealing property is made extremely high, the necessary capacitor aggregation in which a plurality of capacitor elements are collected, is accommodated, and the gas and water of the dielectric substance of the capacitor elements and each kind of insulation materials are vacuum deaerated. On this condition, the deaerated perfluorocarbon liquid is filled, and a capacitor which maintains the amount of residual air in the perfluorocarbon liquid to be not larger than 5 %, is formed. Thereby, the characteristic of high dielectric strength which is originally possessed by the perfluorocarbon liquid, can be effectively used. Further, the nonflammable capacitor having the high dielectric breakdown voltage and high partial discharge start voltage can be obtained.

Next, in a capacitor described in a second embodiment of the present invention, a plurality of capacitor elements which is formed by alternately superimposing a dielectric substance and the conductor material on each other and winding around them, are collected and accommodated in a container. In this container, a fluoride liquid which is formed of only a connection of carbon, fluorine and oxygen, and which includes perfluoropolyether by not smaller than 90 % and whose boiling point is not lower than 120 °C and not higher than 270 °C, and whose dynamic viscosity at 25 °C is from 0.9 mm²/s to not larger than 14 mm²/s, is filled. Further, an absolute pressure in the container is not smaller than 120 kPa and not larger than 300 kPa.

In this embodiment of the present invention, a fluoride liquid which is formed of only a connection of carbon, fluorine and oxygen, and which includes perfluoropolyether, shown by the following structure expression, by not smaller than 90 % and whose boiling point is not lower than 120 °C and not higher than 270 °C, and whose dynamic viscosity at 25 °C is from 0.9 mm²/s to not larger than 14 mm²/s, is impregnated into the capacitor and used as the insulation liquid. Because the fluoride liquid has the nonflammability and no flashing point, it is excellent for the prevention of disaster. The boiling point is high, and the deaeration and dehydro processing are easy. Further, because the viscosity is low, it is easily penetrated into the capacitor element, and the insulation performance can be increased. Furthermore, when the absolute pressure in the container to accommodate the capacitor element is made not smaller than 120 kPa, the partial discharge voltage can be heightened. And, when the pressure is made not larger than 300 kPa, its inner pressure can be maintained by the sealing of the container without increasing the thickness of the container wall.

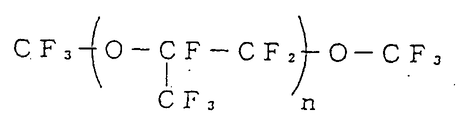

### BRIEF DESCRIPTION OF THE DRAWINGS

Fig. 1 is a front sectional view showing the outline structure of a capacitor according to the embodiment of the present invention;
Fig. 2 is a view showing the relationship between the amount of residual air of a perfluorocarbon liquid and the dielectric breakdown voltage;
Fig. 3 is a view showing the temperature dependency of the partial discharge characteristic according to the kind of fluoride liquids; and
Fig. 4 is a view showing the pressure dependency of the partial discharge characteristic of the fluoride liquids in the present invention.

### DETAILED DESCRIPTION OF THE PREFERED EMBODIMENT

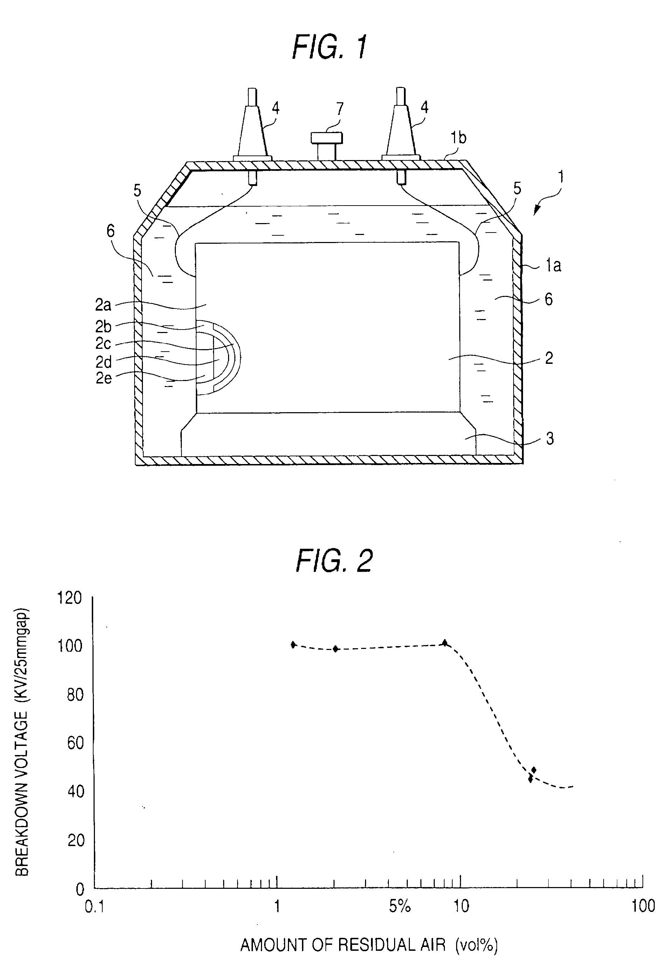

Referring to the drawings, an embodiment of the present invention will be described below. Fig. 1 is a front sectional view showing the outline structure of a capacitor according to a first embodiment, and Fig. 2 is a view showing the breakdown voltage characteristic to the amount of residual air. In Fig. 1, numeral 1 is a metallic capacitor container, numeral 2 is a capacitor element, numeral 3 is an insulating stand, numeral 4 is a bushing, numeral 5 is an leader conductor (lead wire) from the capacitor element, numeral 6 is the perfluorocarbon liquid, and numeral 7 is a plug for covering a hole for aeration and filling the perfluorocarbon liquid. The capacitor container 1 is composed of a container main body portion 1a and a lid portion 1b for mounting the bushing 4, and in the lid portion 1b, the hole for aeration and filling the perfluorocarbon liquid is formed, and it is structured in such a manner that, when the hole is stopped up by the plug 7, the sealing property is greatly increased.

The capacitor element 2 is formed in such a manner that the plastic films (for example, 2 sheets) such as polypropylene which is the dielectric substance of the capacitor, and the conductive foil such as strip-like aluminum which is the capacitor electrode, are alternately superimposed on each other, and wound around. As a portion is cutout and shown in Fig. 1, the capacitor element has the layer structure in which the dielectric substance layer and the conductor layer are alternately superimposed on each other such that, from the outermost layer, the dielectric substance layer 2a, conductor Layer 2c which is a capacitor electrode on the one side, dielectric substance layer 2b, conductor layer 2d which is a capacitor electrode on the other side, dielectric substance layer 2e, are superimposed. The perfluorocarbon liquid 6 is impregnated into between each layer and functions to increase the withstand voltage of the capacitor element 2.

In this connection, the perfluorocarbon liquid 6 has the characteristic in which, when the amount of residual air is few as shown in Fig. 2, it has the high dielectric breakdown voltage of 100 kV at the gap of 2.5 mm. However, when the amount of residual air exceeds 5 %, the dielectric breakdown voltage is not stabled. When the amount of residual air is increased to more than about 8 %, the dielectric breakdown voltage is quickly lowered. From this characteristic, when the amount of residual air contained in the perfluorocarbon liquid 6 is kept to not larger than 5 %, it can be understood that the high dielectric breakdown voltage, originally possessed by the perfluorocarbon liquid 6, can be effectively used.

Accordingly, in the capacitor according to the embodiment, a necessary capacitor aggregation in which a plurality of capacitor elements 2 are collected, is accommodated in the container main body portion 1a of the capacitor container 1, and after the capacitor is formed by being covered with the lid portion 1b, a pipe connected to a vacuum pump, not shown, is connected to a hole, formed in the lid portion 1b, for the aeration and filling the perfluorocarbon liquid. Then, the gas or water of the dielectric substance of the capacitor element and each kind of insulation materials in the capacitor container 1, is removed. Under the condition that the gas or water is removed, the pipe is switched to a pipe for flowing the perfluorocarbon liquid deaerated by the deaeration apparatus. Then, the deaerated perfluorocarbon liquid is filled in- the capacitor container 1, the hole for the aeration and filling the perfluorocarbon liquid is stopped up by the plug 7 and the container 1 is tightly sealed.

In thus formed capacitor, the gas or water generated from the dielectric substance of the capacitor or each kind of insulation materials accommodated in the capacitor container 1 and the perfluorocarbon liquid, is decreased. Further, because the sealing property of the capacitor container 1 is high, there is no penetration of the gas or water from the outside. Thereby, the amount of residual air contained in the perfluorocarbon liquid can be kept to not larger than 5 %.

As described above, according to the first embodiment of the present invention, because the amount of residual air contained in the perfluorocarbon liquid is kept to not larger than 5 %, a nonflammable capacitor in which the dielectric breakdown voltage or partial discharge start voltage is high, and which can be applied to the high electric field specification, and is small sized, can be obtained.

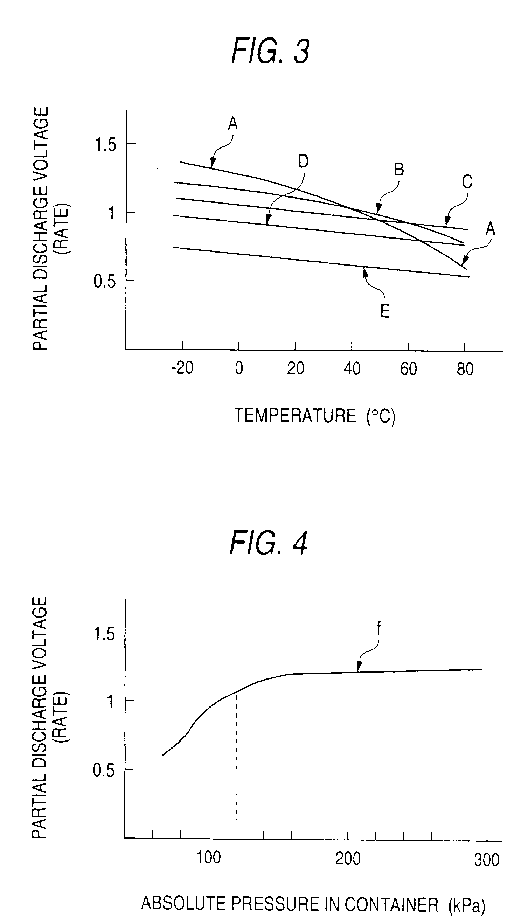

Next, a capacitor regarding of a second embodiment according to the present invention will be described below. A plurality of capacitor elements whose electrode is an aluminum foil using 2 easy impregnating polypropylene films as the dielectric substance, are formed. The fluoride liquid including a per fluoropolyeter having the different boiling point and dynamic viscosity at 25 °C, by not smaller than 90 %, is impregnated into each of capacitor elements. And the temperature dependency of the partial discharge characteristic at the temperature range of normal use (-20 °C to 80 °C) is investigated. The result is shown in Fig. 3.

In Fig. 3, the line A is a curve showing the partial discharge characteristic of the capacitor into which the fluoride liquid of the boiling point 110 °C and dynamic viscosity 0.83 mm²/s is impregnated. The line B is a curve showing the partial discharge characteristic of the capacitor into which the fluoride liquid of the boiling point 120 °C and dynamic viscosity 0.9 mm²/s is impregnated. The line C is a curve showing the partial discharge characteristic of the capacitor into which the fluoride liquid of the boiling point 200 °C and dynamic viscosity 2.9 mm²/s is impregnated. The line D is a curve showing the partial discharge characteristic of the capacitor into which the fluoride liquid of the boiling point: 270 °C and dynamic viscosity 14 mm²/s is impregnated. And, the line E is a curve showing the partial discharge characteristic of the capacitor into which the fluoride liquid of the boiling point 300 °C and dynamic viscosity 20 mm²/s is impregnated.

In the capacitor shown in the curve line A into which the fluoride liquid of the boiling point 110 °C and dynamic viscosity 0.83 mm²/s is impregnated, at the low temperature, the partial discharge voltage -is high. However, as the temperature rises, the partial discharge voltage is largely lowered. While, in the capacitor shown in the curve line E into which the fluoride liquid of the boiling point 300 °C and dynamic viscosity 20 mm²/s is impregnated, the partial discharge voltage is wholly low. Thus, in both of these fluoride liquids, it is understood to be difficult that the capacitor is made high electric field design.

However, in the capacitors shown in curves lines B to D, that is, the capacitors into which the fluoride liquid of the boiling point of not smaller than 120 °C and not larger than 270°C, and dynamic viscosity of not smaller than 0.9 mm²/s and not larger than 14 mm²/s is impregnated, the partial discharge voltage is high in the vicinity of the rated voltage En and stable to the temperature change. Thus, the capacitors into which these fluoride liquids are impregnated, can be made high electric field design.

Next, for the capacitor shown by the curve line C which is considered to be most suitable in the capacitors shown by the curves lines B to D by which high electric field design can be made, that is, for the capacitor into which the fluoride liquid of the boiling point 200 °C and dynamic viscosity 2.9 mm²/s is impregnated, the pressure dependency of the partial discharge voltage is investigated. The result is shown in Fig. 4. The partial discharge voltage is heightened as the absolute pressure in the container increases, and at the pressure larger than the absolute pressure of 180 kPa (kilo Pascal), the almost constant partial discharge voltage characteristic can be obtained.

From the above result, it is understood to be suitable that, as the insulation liquid to be impregnated into the capacitor, the fluoride liquid containing perfluoropolyether of the boiling point of not smaller than 120 °C and not larger than 270 °C, dynamic viscosity of not smaller than 0.9 mm²/s and not larger than 14 mm²/s by not smaller than 90 %, is used, and the absolute pressure in the container accommodating the capacitor elements is made high pressure of not lower than 180 kPa.

However, when the absolute pressure in the container accommodating the capacitor elements is made high pressure at the lowest temperature in the specification of -20°C, as the temperature of the capacitor is increased, the inner pressure of the container is increased, and there is a possibility that the inner pressure exceeds 300 kPa. In this case, the countermeasure such as the increase of the thickness of the container wall, is necessary, thereby, a problem that the weight of the capacitor apparatus is increased and the cost is also increased, is generated.

Accordingly, when a 20 litter container is formed of the iron plate of the normal thickness of 1.7 mm, and in the container, the capacitor elements are accommodated, and after the fluoride liquid containing, by not smaller than 90 %, the perfluoropolyether of the boiling point of not lower than 120 °C and not higher than 270 °C, and dynamic viscosity of not smaller than 0.9 mm²/s and not larger than 14 mm²/s, is impregnated, the container is sealed out at the pressure of 120 kPa (the inner pressure at which the partial discharge voltage of 10 % higher than the partial discharge voltage at 100 kPa is obtained) at the lowest temperature in the specification of -20 °C. In this condition, when the temperature is risen to the high temperature of 60 °C, the pressure in the container becomes 200 kPa, and the partial discharge voltage characteristic which is practically sufficiently excellent, can be obtained.

In such the container, even when the inner pressure of the container is changed due to the temperature change, the pressure of the inside is adjusted by the swelling or contracting of the container corresponding to the inner pressure, that is, by the so-called respiratory action of the container, and the flexibility. Thus, although the capacitor apparatus is simple, a little lowering of the partial discharge voltage due to the temperature rise (refer to Fig. 3) is corrected by the rise of the inner pressure, and the capacitor apparatus can be suitably structured.

As described above, according to the embodiment of the present invention, because the insulation liquid impregnated into the capacitor has the nonflammability and no flashing point, the installation of the fixed extinguisher is not necessary for the installation of the capacitor. In additon, the design electric field can be heightened. Thereby, the size reduction of the disaster prevention type capacitor can be attained.

Needless to say, the structure of the first and second embodiments of the present invention can be applied to each other.

While the presently preferred embodiment of the present invention has been shown and described, it is to be understood that this disclosure is for the purpose of illustration and that various changes and modifications may be made without departing from the scope of the invention as set forth in the appended claims.

## Claims

1. A capacitor comprising:
a capacitor element which is formed by alternately superimposing a dielectric substance and a conductor material on each other and by winding around them; and
a container,
wherein a plurality of the capacitor elements are collected and accommodated in said container in which a fluorine liquid is filled, said container being configured in air tight, and an amount of residual air in the fluorine liquid is not larger than 5 %.

2. The capacitor according to claim 1, wherein the dielectric substance is plastic films.

3. The capacitor according to claim 1, the conductor material is a conductive foil.

4. The capacitor according to claim 1, the fluorine liquid is a perfluorocarbon liquid.

5. The capacitor according to claim 4, the fluoride liquid consisting of a connection of carbon, fluorine and oxygen is filled, the fluoride liquid including perfluoropolyether by not smaller than 90 %, and whose boiling point being not lower than 120 °C and not higher than 270 °C, and dynamic viscosity at 25 °C being from 0.9 mm²/s to not larger than 14 mm²/s, and the absolute pressure in the container is not smaller than 120 kPa and not larger than 300 kPa.

6. A capacitor comprising:
a plurality of capacitor elements which is formed by alternately superimposing a dielectric substance and a conductor material on each other and winding around them; and
a container,
wherein a plurality of the capacitor elements are collected and accommodated in said container in which a fluoride liquid consisting of a connection of carbon, fluorine and oxygen is filled, the fluoride liquid including perfluoropolyether by not smaller than 90 %, and whose boiling point being-not lower than 120 °C and not higher than 270 °C, and dynamic viscosity at 25 °C being from 0.9 mm²/s to not larger than 14 mm²/s, and the absolute pressure in the container is not smaller than 120 kPa and not larger than 300 kPa.
